# EUROPÄISCHE PATENTANMELDUNG

(11) **EP 0 561 168 A1**
(43) Veröffentlichungstag der Anmeldung: **22.09.1993**
(21) Anmeldenummer: 93102555.5
(22) Anmeldetag: 18.02.1993
(51) Int. Cl.: A01D 90/10

(54) **Schliessmechanismus**

(30) Priorität: 19.02.1992 DE 4205046
(71) Anmelder: Scheibenzuber, Josef, jun., D-94474 Vilshofen (DE)
(72) Erfinder: Scheibenzuber, Josef, jun., D-94474 Vilshofen (DE)
(74) Vertreter: Alber, Norbert

(57) **Zusammenfassung**

Die Erfindung betrifft einen Schließmechanismus für die Heckseite von landwirtschaftlichen Selbstlade-Wagen (2) mit geschlossenem Aufbau. Um einen Schließmechanismus zu schaffen, der trotz Nutzung beim Öffnungsvorgang zusätzlich mit einfachem Aufbau ein automatisches Schließen der Heckklappe (5) nach Beenden des Entleerungsvorganges des Ladewagens ermöglicht, ohne daß hierfür oberhalb der normalen Höhe eines Ladewagens viel zusätzlicher Freiraum für das Hochschwenken von bewegten Teilen notwendig wird, wird vorgeschlagen, daß der Schließmechanismus wenigstens eine Parallelstrebe (12) mit gelenkigen Enden, einen doppelt wirkenden Hydraulikzylinder (8) zwischen dem Aufbau und der Funktionseinheit aus Parallelstrebe (12) und Hebel (11) angeordnet und die Verriegelung der Heckklappe (5) einen doppelt wirkenden Hydraulikzylinder (9) aufweist.

## Beschreibung

Die Erfindung betrifft den Öffnungs- und Schließmechanismus, wie er insbesondere an landwirtschaftlichen Selbstlade-Wagen im Heckbereich angeordnet ist.

Mit derartigen Ladewagen wird in der Regel Grünfutter, Heu oder Stroh automatisch mittels einer Beladevorrichtung an der Vorderseite des Ladewagens vom Boden aufgenommen, wobei sich im Inneren des Ladewagens ein Schubboden befindet, um das Material im Inneren gleichmäßig zu verteilen.

Zum Entladen des Ladewagens wird die schräg nach hinten überhängende Heckklappe, die während des Lade- und Transport-Vorganges verriegelt ist, entriegelt und öffnet sich teilweise, und es wird der Schubboden in Bewegung gesetzt, so daß durch den Druck des nach hinten bewegten Materials die Heckklappe weiter aufschwenkt und das über die Hinterkante des Bodens hinaustransportierte Material herausfallen läßt.

In diesem Zusammenhang ist es bisher bekannt, die Heckklappe nicht direkt an der Oberkante des Aufbaus des Ladewagens zu befestigen, sondern an zusätzlichen Gelenkstreben, die etwa parallel zu den oberen Seitenkanten des Aufbaus leicht ansteigend nach hinten verlaufen und mit ihrem hinteren Ende am oberen Bereich der Heckklappe angelenkt waren und mit ihrem vorderen Ende am oberen Teil des Aufbaus.

Dadurch lag der Drehpunkt der Heckklappe bereits etwas oberhalb der Oberkante des Aufbaus, so daß ein Aufschwenken um einen bestimmten Winkelbetrag bereits einen relativ großen Freiraum zwischen der Unterkante der Heckklappe und dem Aufbau bewirkte. Dieser Effekt wurde verstärkt, indem zusätzlich eine Vorrichtung zum Anheben dieser Gelenkstrebe vorhanden war, wodurch beim Öffnungsvorgang dieser Gelenkpunkt zusätzlich nach oben verlagert wurde.

Eine solche Gelenkstrebe ist meist dann vorhanden, wenn das Dach des Ladewagens sowie seine Wände zwischen einer niedrigen und einer hohen Position verstellt werden können. Diese Möglichkeit ist als Trockengutaufbau bekannt, wobei das Dach und oft auch die Wände lediglich aus einem Rohrrahmen mit evtl. darüber gespannten Netzen bestehen. Mittels des Verschwenkens der Gelenkstrebe kann der Schwenkpunkt der Heckklappe auf die Höhe der hohen Position des Daches angehoben werden.

Die Aufgabe der Erfindung besteht darin, einen Schließmechanismus zu schaffen, der trotz Nutzung der oben beschriebenen Vorteile beim Öffnungsvorgang zusätzlich mit einfachem Aufbau ein automatisches Schließen der Heckklappe nach Beenden des Entleerungsvorganges des Ladewagens ermöglicht, ohne daß hierfür oberhalb der normalen Höhe eines Ladewagens viel zusätzlicher Freiraum für das Hochschwenken von bewegten Teilen notwendig wird. Zusätzlich soll dieser Schließmechanismus an bestehenden Ladewagen leicht nachgerüstet werden können.

Diese Aufgabe ist durch die kennzeichnenden Merkmale des Anspruchs 1 gelöst. Vorteilhafte Ausführungsformen ergeben sich aus den Unteransprüchen.

Die Parallelstrebe ist entweder schräg nach hinten ansteigend an den Seitenwänden oder den Dachkanten befestigt oder parallel zur evtl. vorhandenen Gelenkstrebe angeordnet.

Der am Hebel befestigte Teil der Parallelstrebe wird durch einen auf den Hebel einwirkenden, doppelt wirkenden Hydraulikzylinder in eine Position gebracht, in der sich die Heckklappe einschließlich des an ihr befestigten Teiles der Parallelstrebe ungehindert um den Schwenkpunkt der Heckklappe drehen und vom Ladegut in eine geöffnete Stellung gedrückt werden kann, wobei als zusätzlicher Raum bei herabgelassenem Trockengutaufbau nach oben lediglich die Höhe des erstellten Parallelogramms benötigt wird, also diejenige Strecke, um welche die Heckklappe nach oben über diesen Gelenkpunkt mit der Gelenkstrebe oder dem Aufbau des Ladewagens hinausragt. Da diese Distanz aufgrund der zu übertragenden relativ geringen Kräfte auch bei kleinen eingesetzten Hydraulikzylindern kurzgehalten werden kann, ergibt sich keine zusätzliche große Raumhöhe für den Ladewagen.

An welcher Stelle der doppelt wirkende Hydraulikzylinder, der mit seinem einen Ende mit dem Aufbau verbunden ist, auf das Parallelogramm einwirkt, ist nicht ausschlaggebend, solange es sich nicht um die Gelenkpunkte des Parallelogramms handelt.

Wenn der Hydraulikzylinder direkt an der Parallelstrebe oder dem zusätzlichen Hebel angreift, ist eine einarmige Ausbildung des Hebels ausreichend, jedoch liegt dann der Hydraulikzylinder schlecht zugänglich noch oberhalb der normalen Oberkante des Ladewagens.

Wird dagegen als Hebel ein zweiarmiger Hebel verwendet, der auf der von der Parallelstrebe abgewandten Seite über den mittleren Gelenkpunkt des Hebels hinausragt, so greift der Hydraulikzylinder an diesen zusätzlichen Arm des Hebels an, der in der Regel an den Seiten des Ladewagens etwas nach unten ragen wird, so daß der Hydraulikzylinder gut zugänglich an den Außenseiten des Ladewagens untergebracht werden kann.

Mit Hilfe der Parallelogramm-Bewegung soll jedoch nicht nur die Öffnung der Heckklappe ermöglicht werden, sondern - soweit vorhanden - gleichzeitig auch ein Anheben der Gelenkstrebe mit einer einheitlichen Funktion und ohne zusätzliche Bauteile bewirkt werden.

Zu diesem Zweck muß wenigstens ein Anschlag vorgesehen sein, der die Schwenkbewegung des Hebels gegenüber der Gelenkstrebe begrenzt, so daß bei Erreichen dieses Anschlages eine weitere Beaufschlagung durch den Hydraulikzylinder anstelle einer Schwenkbewegung des Hebels gegenüber der Gelenkstrebe begrenzt, so daß bei Erreichen dieses Anschlages eine weitere Beaufschlagung durch den Hydraulikzylinder anstelle einere Schwenkbewegung des Hebels dann ein Anheben der Gelenkstrebe und damit auch der gesamten Heckklappe samt deren oberen Gelenk mit sich bringt.

Zusätzlich sollte auch die Ver- und Entriegelung der Heckklappe gegenüber dem Aufbau des Ladewagens, die üblicherweise an den unteren, äußeren Ecken der Heckklappe sitzt, automatisiert werden.

Dort wird durch Drehen eines einseitig angelenkten Bogens ein vorstehender Zapfen der Heckklappe am Ladewagen gehalten. Wenn sich der Bogen in der verriegelten Position befindet, ist er durch eine Feder vorgespannt und besitzt eine solche führungsfläche, daß die Zapfen der Heckklappe am Bogen einrsten können, ohne daß dieser zunächst in die geöffnete Position verfährt. Diese Bewegung des Verriegelungsbogens kann durch weitere, ebenfalls doppelt wirkende Hydraulikzylinder bewirkt werden, wobei sämtliche Hydraulikzylinder mit der Hydraulik des Schleppers verbunden sind und gespeist werden.

Ein derartiger Schließmechanismus kann an den üblichen Ladewagen jederzeit nachgerüstet werden, selbst dann, wenn es sich um eine Konstruktion handelt, die noch keine Gelenkstrebe besitzt, auf denen die Heckklappe gelagert ist. In diesem Fall kann der Drehpunkt der Klappe direkt am Aufbau des Ladewagens verbleiben.

Da doppelt wirkende Hydraulikzylinder in allen Größen- und Leistungsklassen Zukaufteile sind, sind für die Verwirklichung des Mechanismus lediglich einfache Stahlprofile und Gelenkverbindungen notwendig. Wenn der Hydraulikzylinder des Verriegelungsmechanismus schwächer ist als derjenige an der Parallelstrebe, können beide zusammen beaufschlagt werden ohne daß ein Umsteuerventil vorhanden ist. Dann bewegt sich zuerst der Entriegelungszylinder, wobei die Heckklappe entriegelt wird, und anschließend baut sich Druck im Parallelstrebenzylinder auf, wodurch die Heckklappe frei auspendeln und sich durch den Druck des Ladegutes ganz öffnen kann.

In der Parallelstrebe ist vorzugsweise ein großes Spiel in Längsrichtung eingebaut, was am einfachsten durch eine zweiteilige, ineinanderlaufende Ausführung verwirklicht wird, von der das eine Teil ein Langloch und das anderes Teil einen in dem Langloch laufenden Bolzen besitzt.

Um zusätzlich die Funktionssicherheit für den Betreiber zu erhöhen, wird in oder an der teleskopierbaren Parallelstrebe als Anschlag der Beiden Teile gegeneinander zusätzlich eine Druckfeder angeordnet, um die Heckklappe beim Schließvorgang nicht mit der vollen Kraft der Arbeitshydraulik, sondern begrenzt auf die Federkraft der verwendeten Feder gegen den Ladewagen wirken zu lassen. Für den Fall, daß sich während des Schließvorganges ein Hindernis, beispielsweise ein Mensch, zwischen Heckklappe und Ladewagen befindet, werden hierdurch schwere Verletzungen vermieden.

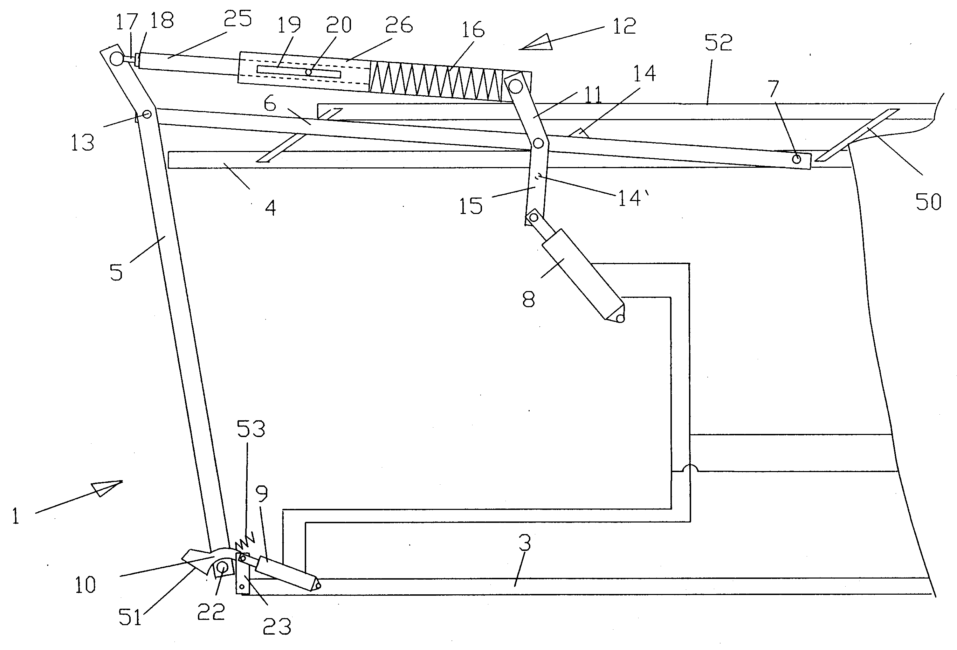

Im folgenden wird eine Ausführungsform gemäß der Erfindung anhand der Figur näher beschrieben.

Die Figur zeigt in der Seitenansicht das hintere Ende eines üblichen landwirtschaftlichen Ladewagens 2, dessen hintere Stirnseite von einer aufschwenkbaren Heckklappe 5 verschlossen wird. Der Aufbau besitzt eine feste Oberkante 4 und einen Boden 3 sowie ein höhenverstellbares Dach 52, das Teil des Trockenaufbaues ist.

An der festen Oberkante 4 ist über Gelenkstreben 50 das dadurch höhenverstellbare Dach 52, der sogenannte Trockengutaufbau, befestigt, der meist ebenfalls nur aus einem Rahmen mit darüber gespannten Netzen besteht.

Die Heckklappe 5 wird um das Gelenk 13 in der Nähe der Oberkante verschwenkt, welches sich am hinteren, freien Ende von Gelenkstreben 6 befindet, deren vorderes Ende am Dach 4 über einen Drehpunkt 7 gelagert ist. Üblicherweise ist diese Gelenkstrebe 2 doppelt ausgebildet und jeweils einer der Dachaußenkanten zugeordnet, so daß in der Seitenansicht der Figur jeweils nur eine Gelenkstrebe 6 mit zugehörigen Gelenken zu sehen ist.

Die Gelenkstrebe 6 steigt von ihrem vorderen Drehpunkt 7 bei der dargestellten geschlossenen Stellung der Heckklappe 5 leicht nach hinten an, so daß das Gelenk 13 über und etwas außerhalb der Hinterkante des Daches 52 im heruntergeklappten Zustand liegt. Die Heckklappe 5 wird an der Hinterkante des Bodens 3 des Ladewages 2 gehalten, indem in dieser Stellung eine verschwenkbarer Verriegelungsbogen 10, der am Boden 3 befestigt ist, auf jeder Seite jeweils einen Sicherungsbolzen 22, der an der Heckklappe 5 befestigt ist, umgreift. Bei geschlossener Stellung des Verriegelungsbogen 10 kann die offene Heckklappe über die Führungsfläche 51 hinter dem mittels Feder 53 beaufschlagten Verriegelungsbogen 10 einrasten. Ein solcher Verriegelungsmechanismus kann selbstverständlich nicht nur an der Unterkante, sondern in jeder beliebigen Höhe an der Heckklappe 5 befestigt sein.

Zur automatischen Betätigung, sowohl zum Öffnen als auch zum Schließen, dieses Verriegelungsmechanismus ist der Verriegelungsbogen 10 an einem Hebel 23 befestigt, der einerseits mittels eines doppelt wirkenden Hydraulikzylinders 9 um seinen Schwenkpunkt bewegt werden kann, indem das Auge des Hydraulikzylinders 9 beispielsweise in einem Langloch 24, welches in Längsrichtung des Hebels 23 ausgebildet ist, zum Ausgleich der Längendifferenz untergebracht ist.

In der dargestellten geschlossenen Stellung der Heckklappe steht diese nicht senkrecht zum Dach 52 und Boden 3 des Aufbaus 1, sondern leicht nach hinten oben überhängend, so daß bei einem Öffnen des Ver-riegelungsbogens 10 bereits aufgrund der Schwerkraft ein Auspendeln der Heckklappe in die Senkrechte erfolgt und somit zwischen Heckklappe und dem hinteren Ende des Bodens 3 ein Freiraum zum Herabfallen des Ladegutes entsteht, der durch das herandrückende Ladegut noch vergrößert wird.

Um ein weites Öffnen der Heckklappe 5 zu ermöglichen, ohne daß über dem Dach 52 - bei abgeklapptem Trockengutaufbau - des Ladewagens noch sehr viel freier Raum zur Verfügung stehen muß, was am Entladeort oft nicht der Fall ist, und um weiterhin ein automatisches Verschließen der Heckklappe 5 zu ermmög-lichen, ragt die Heckklappe 5 über das Gelenk 13 etwas nach oben hinaus. An ihrem oberen Ende ist eine Parallelstrebe 12 oberhalb und in etwa parallel zur Gelenkstrebe 6 angeordnet, und zwar jeweils wieder doppelt, etwas oberhalb der Außenkanten des Aufbaus.

Das vordere Ende der Parallelstreben ist mit dem oberen Ende eines doppelarmigen Hebels 11 gelenkig verbunden, der in der Mitte drehbar in der Gelenkstrebe 6 gelagert ist, und dessen darüber hinaus nach unten ragender Arm 5 gelenkig mit einem doppelt wirkenden Hydrau-likzylinder 8 verbunden ist.

Da die Wirkrichtung des Hydraulikzylinders 8 im Winkel zum Arm 15 des Hebels 11 steht, wird durch Betätigung des Hydraulikzylinders 8 der Hebel 11 zu einem mittigen Gelenkpunkt verschwenkt und damit die Teilstrebe 26 der Parallelstrebe 12 relativ zur darunter angeordneten Längsstrebe 6 in ihrer Längsrichtung bewegt.

Bei entriegelter Heckklappe 5 kann diese somit frei um ihren Gelenkpunkt 13 pendeln, da sich der Bolzen 20 der Teilstrebe 25 im Langloch 19 hin- und herbewegeb kann.

In vielen Fällen ist es jedoch sinnvoll, diese Bewegung der Teilstrebe 26 - bewirkt durch den Hebel 11 - gegenüber der Gelenkstrebe 6 auf einen bestimmten Weg zu beschränken. Bei witerer Betätigung des Hebels 11 soll über eine geringfügige Anhebung der Gelenkstrebe 6 und damit des Schwenkpunktes 13 der Heckklappe 5 die hintere Stirnseite des Ladewagens weiter geöffnet werden. Um hierfür keine zusätzlichen Betätigungsmechanismen zu benötigen, ist entweder an der Gelenkstrebe 6 ein Anschlag 14 angeordnet, der die Schwenkbewegung des Hebels 11 bei der Öffnungsbewegung für die Heckklappe 5 begrenzt. Eine Alternativlösung stellt eine Anordnung eines Anschlages 14' am Arm 15 des Hebels 11 dar, wobei dieser Anschlag in den Bewegungsbereich der Gelenkstrebe 6 hineinragen müßte.

Die übereinstimmende Wirkung beider Varianten besteht darin, daß beim Öffnen der Heckklappe 5, wenn also der obere Teil des Hebels 11 nach rechts verschwenkt wird, der vorhandene Anschlag 14 in Anlage an den Hebel 11 gerät, bzw. der Anschlag 14' in Anlage an der Gelenkstrebe 6, und bei einer weiteren Betätigung des Hydraulikzylinders 8 statt einer Relativverschiebung der Parallelstrebe 12 zur Gelenkstrebe 6 ein Hochschwenken der Gelenkstrebe 6 um den Drehpunkt 7 stattfindet.

Falls für das Hochschwenken der Gelenkstrebe über dem Ladewagen nicht genügend Raum zur Verfügung steht, wird die frei pendelnde Heckklappe lediglich durch das herandrückende Ladegut weiter um das Gelenk 13 herum aufgeklappt.

Da es sich bei dem Hydraulikzylinder 8 um einen doppelt wirkenden Zylinder handelt, der durch Hydraulikbeaufschlagung nicht nur ausgefahren, sondern auch mit Kraft eingezogen werden kann, kann durch eine gegenläufige Ansteuerung auch ein Schließen der Heckklappe 5 erzielt werden, wobei natürlich zuerst ein Absinken der Gelenkstrebe 6 zu deren Ruheposition erfolgt, und erst anschließend - nach Außeranlage geraten der Anschläge 14 bzw. 14' eine Schwenkbewegung des Hebels 11 gegenüber der Gelenkstrebe 6 stattfindet.

Die Hydraulikzylinder 8 und 9 werden über einen Hydraulikanschluß an den Schlepper des Ladewagens 2 versorgt und von dort aus gesteuert.

Um bei dem gelösten Verriegelungsbogen 10 ein freies Pendeln der Heckklappe 5 um das Gelenk 13 zu ermöglichen, ist die Parallelstrebe 12 zweiteilig mit ineinanderlaufenden, teleskopierbaren Teilstreben 25, 26 ausgebildet, wobei eine der Teilstreben 25, 26 in Längsrichtung ein Langloch 19 aufweist, und die andere Teilstrebe einen im Langloch 19 laufenden Bolzen 20. Dadurch ist in dem Bewegungsbereich des Bolzens 20 im Langloch 19 ein kraftfreies Pendeln der Deckklappe 5 möglich.

Das Langloch 19 ist dabei so bemessen, daß bei einer Schließbewegung der Parallelstrebe 12 die Teilstrebe 25 den Anschlag an der Teilstrebe 26, in diesem Fall also die Druckfeder 16, erreicht, ohne daß der Bolzen 20 das rechte Ende des Langloches 19 erreicht.

Bei der Öffnungsbewegung der Parallelstrebe 12 dagegen liegt der Hebel 11 am Anschlag 14 bzw. 14' der Schrägstrebe 6 an, ohne daß der Bolzen 20 das linke Ende des Langloches 19 erreicht hat.

Bei einem losen Pendeln der Heckklappe 5 wirkt die Druckfeder 16 der Teilstrebe 26 noch mit einer definierten Vorspannung auf die Teilstrebe 25 ein.

Um weiterhin beim Durchführen der Schließbewegung die Heckklappe 5 nicht mit der vollen Kraft des Hydraulikzylinders 8 gegen den Aufbau 1 des Ladewagens zu pressen, ist im weiteren Verlauf der Parallelstrebe 12 zwischen den beiden teleskopierbaren Teilstreben eine Druckfeder 16 angeordnet, deren Federkraft die Obergrenze darstellt, mit der die Heckklappe 5 gegen den Aufbau 1 angepreßt wird.

Dadurch wird vor allem das Unfallrisiko bei einem vollautomatischen, vom Schlepper aus gesteuerten Öffnen und Schließen der Heckklappe 5 verringert.

## Patentansprüche

1. Schließmechanismus für die Heckseite von landwirtschaftlichen Selbstlade-Wagen mit geschlossenem Aufbau, mit
- einer Heckklappe (5), die in der Nähe ihrer Oberkante gelenkig mit dem Ladewagen verbunden ist, und
- einer Verriegelung zwischen der Heckklappe (5) und dem Aufbau (1),
**dadurch gekennzeichnet, daß**
a) wenigstens eine Parallelstrebe (12) mit ihren Enden gelenkig einerseits mit der Oberkante der Heckklappe (5) und andererseits über einen Hebel (11) mit dem oberen Bereich des Ladewagens (2) verbunden ist,
b) ein doppelt wirkender Hydraulikzylinder (8) zwischen dem Aufbau (1) und der Funktionseinheit aus Parallelstrebe (12) und Hebel (11) angeordnet ist, so daß eine Bewegung des Hydraulikzylinders (8) eine Öffnungsbewegung von einer Teilstrebe (26) der Parallelstrebe (12) und dem Hebel (11) bewirkt und damit ein Aufschwenken der Heckklappe (5) ermöglicht, und
c) die Verriegelung der Heckklappe (5) einen doppelt wirkenden Hydraulikzylinder (9) umfaßt, zum automatischen Ver- und Entriegeln der Heckklappe (5) gegenüber dem Aufbau (1).

2. Schließmechanismus nach Anspruch 1,
**gekennzeichnet durch**
a) wenigstens eine Gelenkstrebe (6), deren hintere Enden mit dem oberen Bereich der Heckklappe (5) an einem Gelenk (13) und deren vordere Enden mit dem Dach (4) des Aufbaus (1) des Ladewagens (2) an einem in Fahrtrichtung vor der Hinterkante des Dachs (4) liegenden Drehpunkt (7) gelenkig befestigt sind,
b) eine Einrichtung zum Anheben der Gelenkstrebe (6) aus der mit dem Dach (4) des Aufbaus (1) etwa fluchtenden Ruheposition nach oben und
c) wenigstens einen Anschlag (14), der die Öffnungsbewegung des Hebels (11) gegenüber der Gelenkstrebe (6) begrenzt

3. Schließmechanismus nach Anspruch 1 oder 2,
**dadurch gekennzeichnet, daß**
der Hydraulikzylinder (8) zwischen dem an der Parallelstrebe (12) angelenkten Teil des Hebels (11) und dem Aufbau (1) angeordnet ist.

4. Schließmechanismus nach Anspruch 1 oder 2,
**dadurch gekennzeichnet, daß**
- der Hebel (11) als zweiarmiger Hebel ausgebildet ist und
- der Hydraulikzylinder (8) zwischen dem von der Parallelstrebe (12) abgewandten Arm (15) des Hebels (11) und dem Aufbau (1) des Ladewagens (2) an der Seitenwand des Aufbaus (1) befestigt ist.

5. Schließmechanismus nach einem der vorhergehenden Ansprüche,
**dadurch gekennzeichnet, daß**
die Parallelstrebe (12) in Längsrichtung zweiteilig und teleskopierbar ausgebildet ist und eine in ihrer Längsrichtung wirkende Druckfeder (16) aufweist.

6. Schließmechanismus nach einem der vorhergehenden Ansprüche,
**dadurch gekennzeichnet, daß**
der teleskopierbare Teil der Parallelstrebe (12) in Längsrichtung ein großes Spiel besitzt, um in der Ruheposition ein kraftloses Pendeln der Heckklappe (5) um das Gelenk (13) zu ermöglichen.

7. Schließmechanismus nach Anspruch 5,
**dadurch gekennzeichnet, daß**
das große Spiel in Längsrichtung mittels Langloch (19) und darin laufendem Bolzen (20) im teleskopierbaren Teil der Parallelstrebe (12) ermöglicht wird.

8. Schließmechanismus nach einem der vorhergehenden Ansprüche,
**dadurch gekennzeichnet, daß**
die Anschläge (14) durch Fortsätze (21) gebildet werden, die am Arm (15) des Hebels (11) angeordnet sind und in den Bewegungsbereich der Längsstrebe (6) ragen, so daß bei Bewegung des Doppelhebels (11) die Fortsätze (21) zur Anlage an der Gelenkstrebe (6) kommen und zum Weiterbewegen des Doppelhebels (11) eine Bewegung der Gelenkstrebe (6) erfolgt.

9. Schließmechanismus nach einem der vorhergehenden Ansprüche,
**dadurch gekennzeichnet, daß**
im teleskopierbaren Teil der Parallelstrebe (12) ein Anschlag angeordnet ist, der das Zusammenschieben beschränkt.

10. Schließmechanismus nach Anspruch 9,
**dadurch gekennzeichnet, daß**
der Anschlag in der Parallelstrebe (12) eine Druckfeder ist.
